# EUROPEAN PATENT APPLICATION

(11) **EP 1 873 704 A1**
(43) Date of publication of application: **02.01.2008**
(21) Application number: 06013601.7
(22) Date of filing: 30.06.2006
(51) Int. Cl.: G06Q 20/00

(54) **Method and system for determining whether the origin of a payment request is a specific e-commerce network source**

(71) Applicant: MediaKey Ltd., Road Town, Tortola, B.V.I. (BS)
(72) Inventor: Thomsen, Jacob, 1264 Copenhagen K (DK); Elsman, Martin, 2800 Lyngby (DK)
(74) Representative: Boesen, Johnny Peder

(57) **Abstract**

The invention concerns a method and a system for determining whether the origin of a payment request (10) is a specific e-commerce network source, in particular a website (420) in order to reduce payment account fraud in relation thereto, said method comprising the following steps: storing a fraud check variable (3s); assigning a source check tag (20) in relation to said payment request (10), said source check tag (20) comprising at least said fraud check variable (3a), and verifying that a payment request relating to a source check tag is originating from said specific source by determining whether said assigned fraud check variable (3a) matches said stored fraud check variable (3s). Thus, the payment request source, e.g. website, wherefrom a payment request originates may be identified because the source check tag being provided contains a variable, e.g. a string of integers and/or letters, which changes from payment request to payment request in a manner, which is not apparent to the merchant. This improves the confidence in particular for a transaction responsible entity, such as an acquirer and/or a payment solution provider that a received payment request does in fact originate from a specific website, e.g. an approved website.

## Description

### Field of invention

The present invention relates to a method and a system for determining whether the origin of a payment request is a specific e-commerce network source, in particular a website, in order to reduce payment account fraud in relation to said source.

### Background of invention

Network based commerce activities or e-commerce, which term comprises sales, in particular involving payments, of products or services between customers or payers and merchants performed through a computer network, such as the Internet, by the customer using an electronic communication device, such as a personal computer, a Personal Digital Assistant (PDA), or mobile phone, have gained substantial popularity and prominence in the global economy.

Many products and services are available for sale in a network by merchants. The products may for example be SMS-messages or call time available for mobile phones, mail order gifts, ware house items, and the services may be hotel or travel bookings, and other network based services, e.g. long distance performed server updates, downloads of music, movies and other entertainment, and many other.

However, in order to provide e-commerce, a merchant's website must provide a possibility to pay using a payment solution, which may comprise the use of physical credit, debit, or cash cards, mobile phone, wire, bank transfers, or e-payments such as e-Dankort and e-bank payments.

A payment solution generally necessitates a pre-acceptance of a merchant by a provider of the payment solution. For example, a credit card provider may require that certain terms or conditions are to be met by the merchant in order to establish a merchant payment account with an acquirer, which may be the merchant's bank company.

For example, in order to process a credit card transaction, a merchant must typically establish an account with the acquirer. Because the acquirer takes on a certain financial risk when agreeing to process a merchant's transactions, an application and underwriting process typically takes place before a payment account (often referred to as a 'merchant account') is opened. Said payment account may be a credit card account, a debit card account, a physical bank account, or any other account being associated with the merchant. The account can, but need not be, associated with a physical card.

For example, a payment account may be established by an acquirer requiring the merchant to fill out a credit application. Based on the application the Acquirer determines whether the merchant would be a suitable client, e.g. based on information on the type of items being sold on the merchant's website. If so, the account is established and the merchant may begin accepting payments from their customers for their goods or services provided on said website.

A novel type of payment solution provider is an Internet payment service provider (IPSP), who authorizes the payment by performing a transaction in relation to said payment, such as a bank company, a credit card company, or the like. An IPSP is an entity that enters into a contract with the acquirer to shoulder financial responsibility and liability for payment accounts, by which merchants or the website owners are allowed to process and settle Internet transactions.

IPSP's are basically third party resellers for merchants who wish to sell online but who do not have their own merchant accounts. The IPSP resells the online merchant's products and services through its own merchant account, serving as an "umbrella" under which businesses process money under. This does not mean that just anybody can sign up with an IPSP, who have instigated strict terms and acceptable use policies that dictate what kind of businesses are acceptable.

To ensure that online merchants are financially responsible, many payment solution providers, including IPSP's, enforce strict policies on behalf of the acquirer, who shoulder the economic and legal responsibilities of the transaction, by inspecting the online merchant's websites by monitoring. Said policy may be as follows: Prior to signing an online merchant, the acquirer must obtain a detailed business description from the merchant, and must examine the merchant's website to verify that the merchant is operating within the acquirer's jurisdiction; ensure that the merchant is not engaged in illegal activities or any activity that could damage the providers system or brand; retain copies of all relevant website screen shots, and perform an annual website review. In order to remain an online merchant, acquirers must examine the merchant websites on a regular basis.

The above mentioned periodic merchant website examination or review may be performed automatically, and is required for assuring that the website, which has been signed up by the merchant in the account application and approved as such, is in fact existing in the virtual world and selling the product or service, which the merchant is claiming to sell.

The problem for the acquirer and/or payment solution provider is that if payments are being performed on a website selling illegal products by using the payment account for the legal products, the credit card provider and/or acquirer may be liable for legal actions in different jurisdictions according to the laws governing them, e.g. laws such as the US Patriot Act (section 326) for preventing money laundering and terrorist financing through the existing systems. Further, the website may sell products or services that are in violation of the card associations' rules and regulations or in violation of the specific acquirers contract with the card assocation.

Experience has unfortunately demonstrated to both acquirers and payment solution providers that despite due care by active monitoring some merchants have been able to perform fraudulent acts, i.e. payment account frauds by having established such payment accounts in order to enable payment requests via an approved website, where in fact some or all of the resulting payments requests to said payment account have not originated from said approved website but instead from another co-existing website e.g. selling unauthorised goods, in violation of their merchant account contract. These acts may go unnoticed even when applying the above mentioned strategy of performing automatic or manual periodical website reviews, because the approved site is in existence and is claiming to sell or is actually selling the legal products.

One example may be the following: A fraudulent merchant establishes a legitimate website for selling pet supplies such as pet food, playthings and supplies. He applies as mentioned above for a credit card payment solution on his site with one of the major credit card providers. One of the conditions, which the acquirer and/or credit card provider has set during establishment of the account, is that the merchant must allow for periodic checks of his website, whether it is in fact a website, which does sell the items indicated on the application, or the acquirer may remove the authorization from the merchant to use the payment account.

The acquirer then regularly performs a survey of the sponsored website in question, e.g. every month, quarterly or yearly in order to be assured that said website does indeed display and perform sales of pet supplies, and complies with the other set criteria for using the credit card account in question, e.g. such as displaying the credit card trademark correctly etc.

However, if the fraudulent merchant around the same time of establishing the legitimate pet shop website establishes an illegitimate website, e.g. a pornographic site, and uses the same credit card account for payment upon said pornographic site by displaying the possibility to pay by the credit card in question, such payment request may be processed unnoticed for transaction by the acquirer and/or credit card provider, because the periodical website review has not shown any problems with the approved website.

With the presently available tools, it is not possible to provide a check of the origin of a payment request for websites on the World Wide Web WWW when using dynamically generated HTML (HyperText Markup Language) pages, which are generally used for network sales pages issuing payment requests.

WO 2004/061733 discloses systems and methods for electronically monitoring fraudulent activity comprising monitoring a merchant's payment accounts. However, these have been provided in order to reduce occurrences of payments with non-existing cards performed by the merchants themselves and is not suitable for the above problem, because the check for fraudulent merchants is performed after the fraudulent act has been committed, which does not reduce acquirer and/or payment provider liabilities.

Accordingly, one object of the present invention is to provide a method and a system for reducing payment account fraud in relation to an e-commerce source, in particular a website, by providing a reliable check that payments requests to be performed for an established payment account is in fact provided from the specific source, which has been approved and/or is regularly being checked by or for said payment solution provider and/or acquirer.

### Summary of invention

According to the present invention, there is provided a method and a system for determining whether the origin of a payment request is a specific e-commerce network source, in particular a website in order to reduce payment account fraud in relation thereto, said method comprising the following steps: storing a fraud check variable; assigning a source check tag in relation to said payment request, said source check tag comprising at least said fraud check variable, and verifying that a payment request comprising a source check tag is originating from said specific source by determining whether said assigned fraud check variable matches said stored fraud check variable.

Thus, the payment request source, e.g. website, wherefrom a payment request originates may be identified because the source check tag being provided contains a variable, e.g. a string of integers and/or letters, which changes from payment request to payment request in a manner, which is not apparent to the merchant. This provides confidence to a transaction responsible entity, such as an acquirer and/or a payment solution provider that a received payment request does in fact originate from a specific website, e.g. an approved website.

Accordingly, if a fraudulent merchant tries to copy the source check tag and assign it to a further payment request originating from an illegal site, this is not feasible because the earlier payment request from which he has copied the source check tag has a high probability of not matching a stored fraud check variable for the payment request to which the payment identification number relates.

Accordingly, a payment request is tagged with information, which subsequently can be used by e.g. an acquirer to identify the origin of the payment request, and further it is ensured, that such tag is not easily copied for other payment requests, which do not have their origin within the approved source. Thus, an object is to deter merchants from performing payment account fraud as described above.

The step of storing may be performed later or before the step of assigning, preferably simultaneously, e.g. using a protocol assigning and storing the fraud check variable at the same point in time.

A different type of origin tracking is known from US patent 6,223,215 wherein is described a method of tracking a users purchases on a network or session for an origin-through-sales in order to analyse purchase and traffic patterns for online sales, in particular for measuring the effectiveness of advertising media placements within an Internet website. However, this type of tracking stores the succession of media viewed, not a variable identifying the site in question, and does not relate to the presently addressed problem of identifying the website in question in order to reduce payment account fraud.

In a first embodiment of the method and system according to the invention said fraud check variable comprises a payer fraud risk potential being determined when a payer is performing a sale on said website leading to said payment request. Such potential is provided for a merchant and/or acquirer in order for him to evaluate the potential for the payer being fraudulent in connection with transacting the payment request. Thus, said fraud check variable is changing according to input provided within the merchants own website, which fact does not allow merchants easy copying of the resulting fraud check tag to other, later issued payment requests. The reason for this is that each payer fraud risk potential is linked to a specific payment request, which differentiate the payment requests from each other. A further advantage of assigning a fraud check variable, which indicates the potential for payer fraud, is that it conveys additional information apart from the information of the possibility of payment account fraud by a merchant, for each payment request issued by the website in question, which information may be used for further processing of the transaction, e.g. a fraud check of the payer.

In a further embodiment of said method and said system said payer fraud risk potential is provided based on an analysis of said payer's behaviour within said source when performing said sale. The fact that said fraud risk potential has been provided by recording payer behaviour within an approved website, e.g. a cumulative fraud score based on discrete event records over certain time intervals, when a payer is making his way through the relevant pages during the sale, provides for a fraud check variable, which further improves the confidence of a transaction responsible entity that payment account fraud is not attempted, because the tag may not easily be copied by any potentially fraudulent merchant, because he would not have access to the basis generating the resulting variable.

An example of providing said payer fraud risk potential is described in European patent application no. 06075254.0 presently not yet publicly available, which is hereby incorporated by reference in its entirety. In particular, the description p.18, l.27 - p.21, 1.3 describes the process for providing a fraud risk potential for a payer visiting a site being serviced by a method and system as described therein, and the description p.25, 1.15 - p.26.1.28 describes how the fraud risk potential may be conveyed to a merchant and/or payment solution provider in order to provide a basis for deciding whether to proceed with an authentication of the transaction or not.

In yet another embodiment of said method and said system said stored fraud check variable comprises a corresponding payment identification number relating to said payment request and said verification step comprises determining whether said assigned fraud check variable matches said stored fraud check variable using a comparison of said stored payment identification number and the payment identification number of the payment request. Accordingly, when the fraud check variable further comprises a payer fraud risk potential, this is to be included in the match, i.e. the payment identification number is used for identifying the relevant payer fraud risk potential, for which the stored payer fraud risk potential must match the assigned payer fraud risk potential within the tag. This is particular an advantage, if the tag is not attached to the payment request, but instead travels independently therefrom to the transaction responsible entity, because then the identification of said payment request is eased by said payment identification number.

In yet another embodiment of said method and system said fraud check variable comprises source information relating to said source and said verification step comprises determining whether said stored source information matches said assigned source information. Thus, the identification of the source of a payment request may be performed by a direct identification of the source using the assigned source information. This is in particular an advantage, when the transaction responsible entity is performing the source check method using a verification database provided locally, i.e. within or in communication with the computer device of said entity. The entity has then previously been provided with all necessary details of the merchant source, which may then be used for providing a match for the source information of said fraud check variable. Thus, the transaction responsible entity may perform an independent source check, i.e. it is not necessary for the entity to rely on outside service providers for providing assurance for the origin of a payment request, which improves the safety.

In another embodiment of said method and system said source information comprises information such as website name, merchant name, site name, product category, and/or website snap shot of said source. Any combination of source information may be used in order to provide a fraud check variable that at least varies for the different payment requests.

In yet another embodiment of said method and system said source is a network site, such as a website on the Internet. Alternatives are cellular sales points, LAN or WAN sites or the like. When the source is an Internet website, the selection of customers and merchants available is increased, which provides a larger market potential. Each page of the website or the transaction subsystem of a dynamic HTML site may provide the source check tag, as will be appropriate for the type of website in question.

In a further embodiment of said method and system said source is a specific webpage within said website, such as a payment page. Accordingly, the most relevant page is the source providing the fraud check variable.

In yet another embodiment of said method and system said step of storing further comprises storing user fraud information, such as logged events, acquired user data, and/or transaction data in relation to said payment request. Accordingly, relevant information relating to the payer fraud risk potential and how it was generated are available for retrieval by a transaction responsible entity, when necessary. The fraud check variable may then be used as a reference for retrieving such data from e.g. a database remotely located from said entity, in which case the verifying step may further comprise transmitting such user fraud information to said entity. This provides for an automatic transfer of user fraud information, which reduces the number of necessary transfers between website and transaction responsible entity, which relates to the transaction to be performed, to one.

In another embodiment of said method and system said stored fraud check variable is stored in a verification database, optionally together with payment identification number, source information and/or user fraud information. Thus, the relevant information relating to the source fraud check, and optionally the payer fraud risk may be collected and administered by means remotely located from said website.

In yet one embodiment of said method and system said assigning step is performed by a payment protocol within said source. Thus, the assigning is performed by a standard application, which reduces the programming necessary.

In yet one embodiment of said method said assigning step is performed every time a payment request is provided from said source and said assigned fraud check variable is attached to said payment request. The tag is then provided with the payment request, which is an advantage, because the payment request may comprise further data, such as payment identification number, merchant information etc., for identifying the relevant fraud check variable within the verification database.

In yet another embodiment of said method said assigning step is performed every time a payment request is provided from said source and said assigned fraud check variable is provided independently from said payment request. Thus, the tag may travel independently, while at the same time enabling an identification of the relevant payment request.

In yet another embodiment of said method said step of assigning is performed once to said source, e.g. when said source is being approved. That is to say the ability of storing and/or assigning is provided once when said source has been approved, e.g.by supplying the page with an Application Program Interface (API).

In a further embodiment of said method said source check tag further comprises a reference code unique to said source. Thus, available source information stored in said database may be retrieved quickly and without the use of source information in said fraud check variable, which reduces the size of the variable considerably, i.e. reduces the data transmission time needed.

In a further embodiment of said method it comprises the steps of 1) encrypting at least part of the data in said source check tag when assigning it, and 2) decrypting said encrypted part of said data when verifying the origin of said payment request. This may further ensure against merchants trying to copy the relevant part of the source check tag, i.e. reuse the tag for other payment requests.

In a further embodiment of said method said encryption and decryption comprises public and private key cryptography. Accordingly, it is only the intended recipient, such as the transaction responsible entity, who may read the sensitive fraud information contained within the tag, not even any fraud check service provider or further others within a payment request verification chain, as will be explained below.

In a further embodiment of said method said at least part of the data comprises said fraud check variable, optionally comprising said payment identification number. Thus, it is only the variable which is encrypted, leaving the other data of the tag available for further processing, e.g. by others within said payment request transaction approval chain. This reduces the data processing needed, and hides the only information, which could be used for copying the tag.

In a further embodiment of said method the step of verifying a source check tag comprises the steps of receiving a verification request from a transaction responsible entity comprising at least said source check tag; and transmitting a verification response to said entity at least comprising the result of said determination. Accordingly, the verification may be performed remotely from said entity, or alternatively locally by said entity. The result of the determination may comprise a positive signal for accepting the source of the payment request and thus proceed with the transaction, or a negative signal for not accepting the source, in which case the transaction may be terminated, and/or a message displayed on a device of the transaction responsible entity to inform of the payment request originating from another, not approved site.

In one embodiment of said method said verification response further comprises one or more of the following: said payer fraud risk potential, said source information and/or said user fraud information. Accordingly, the tag may be used as a retrieving tool for retrieving other information, e.g. user fraud information, not comprised within said tag.

In a further embodiment of said method said verification database is provided remotely from said transaction responsible entity. The verification may then be performed by a remote device, e.g. a source check service provider, which reduces the transaction responsible entity's workload, and thus assigns the responsibility therefore to an outside provider. Alternatively, it may be provided locally with a device of the entity, and the responsibility remains with the entity.

### Short description of drawings

In the following, the invention will be described in more detail with reference to the schematic drawings, in which:
- Fig. 1: shows an overview of a system according to a first embodiment of the present invention;
- Fig. 2: shows a system of fig. 1 providing further details of the transaction responsible entity;
- Fig. 3A-3D: shows four different examples of source check tags being used with a system according to the present invention; and
- Fig. 4: shows a flow chart of one embodiment of a method according to the present invention.

### Detailed description of the invention

As will be appreciated by the person skilled in the art, the present invention may be implemented in software executed by one or more processors, such as server computers in data communication with other computers via a network, e.g. the software program may be stored in the memory and executed by the CPU of the computer. Further, parts of the software may be executed within different computer devices.

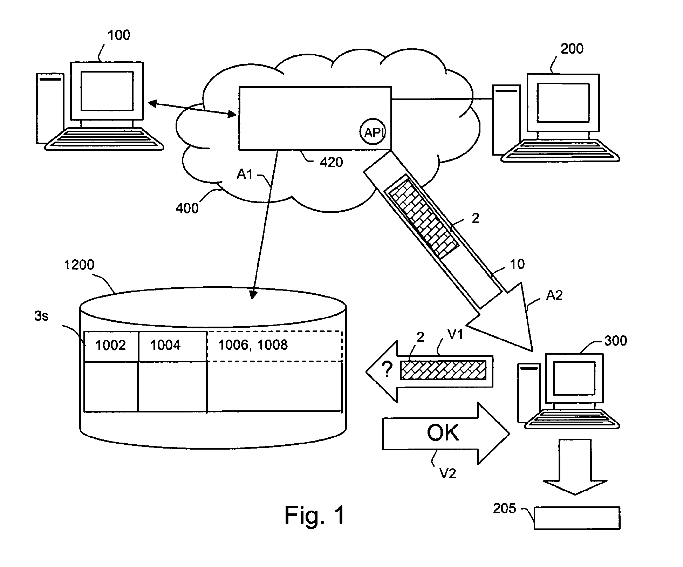

In fig. 1 is shown a system according to one embodiment of the present invention for reducing payment account fraud in relation to an e-commerce source which payment is performed by a payer using his payer device 100 on a website 420 on the Internet 400 provided by a merchant's web server 200. A device 300 operated by a transaction responsible entity, such as an acquirer or an IPSP, is responsible for the processing of a payment request 10 received by said entity 300, where said payment request is the result of a payment actions performed by said payer on the website 420. The system will provide for a check of the origin of said payment request 10, i.e. that it is in fact originating from a specific source, in this case a website 420 on the Internet, which has been approved during the establishment of a payment account 205 by the acquirer, such as the bank of the merchant providing the website 420 in question. If the check is positive, the entity device 300 may proceed with the transaction in order to ultimately accredit the transaction to the payment account 205 of the merchant. If the check is negative the transaction responsible entity device 300 may have to abort the transaction before it is completed, e.g. by annulling the payment request, and/or at least identify the payment request as not originating from a source which has been approved.

The system comprises means for storing at least a fraud check variable 3s and optionally corresponding identification data, means for assigning a source check tag 2 comprising said fraud check variable 3a relative to said payment request 10; and means for verifying that said source check tag 2 relating to a payment request 10 is originating from said specific source 420.

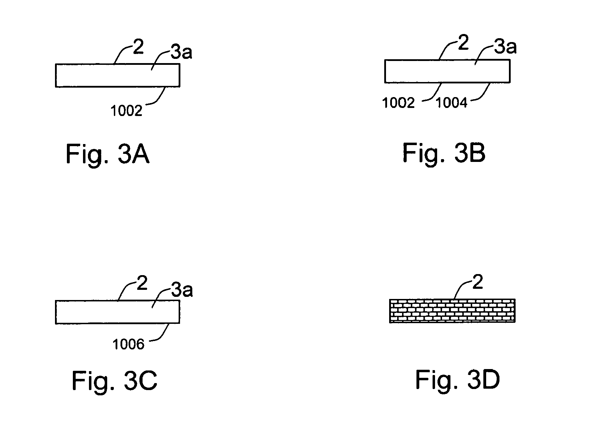

Two general embodiments of tags according to the invention have been envisioned, a first using a fraud check variable 3a comprising at least a payer fraud risk potential 1002 and discussed in relation to fig. 1, a second using a fraud check variable comprising source information 1006, and the combination of these two embodiments may also be conceived. However, alternatives may be conceived, comprising tags with fraud check variables of different kinds suitable for identifying the source of a payment request or the payment request per se. The tag 3 will be further described below, and in relation to figs. 3A to 3D.

As shown in fig.1 the system is in communication A1 with said website 420 e.g. by using the Internet or by a separate computer link in order to provide storing means according to the present invention using a verification database 1200 for storing records of fraud check variables 3s, and optionally further corresponding information, said variable e.g. comprising a payer fraud risk potential 1002, payment identification number 1004, source information 1006 and/or user fraud information 1008, relating to the different payment requests issued by the website 420.

Further, said system has assigning means within the website 420 for example by specification of the standard Open Market TRANSACT Application Program Interface or API, or a separate API, e.g. within the Domain field, assigning a source check tag 2 accompanying the payment request 10, which may also include a payment identification number. Alternatively, the assigning may be performed remotely from said website, e.g. as a transcript from said verification database 1200 provided separately from said payment request to said entity 300.

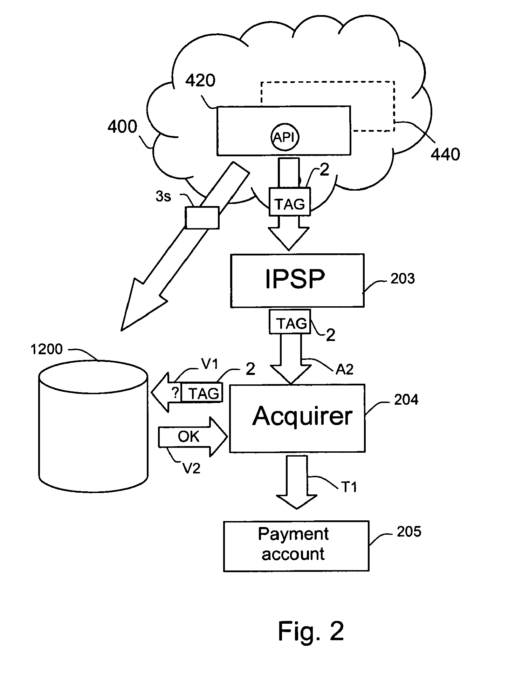

Said system is further in communication with said device 300 of a transaction responsible entity, which may be an acquirer, e.g. said merchant's bank holding the payment account 205 used for payment on his website, and/or a payment solution provider, e.g. a credit card provider or an IPSP. A more detailed description of the transaction responsible entity 300 will follow below in relation to fig. 2. The system is in communication with said entity device 300 e.g. by using the Internet or by a separate computer link in order to provide verification means utilizing said verification database 1200 for verifying that a payment request, received by said entity 300, originates from an approved website 420.

When performing a sale upon said website 420, several subsystems may be in operation for the website in question, generally comprising a catalogue subsystem using a shopping card database, where the shopping cart data is passed on to a purchase subsystem, if the payer decides to purchase the items of the shopping cart. The purchase subsystem comprises a transaction database, the data of which is passed on to a payment request 10 for use within a transaction process or subsystem, when the user is using a payment solution provided on the website, e.g. using his credit card for payment. The transaction process generally includes an authentication of the payment request 10, e.g. by the credit card provider or by an IPSP, before settling the amount with the payment account 205. The authentication may include different checkups, such as a verification of the transaction details, credit card authentication, etc.
One such check-up may be a user fraud check-up, another may be a merchant payment account fraud check by a method according to the invention.

In fig. 1 an encrypted source check tag 2 is attached to said payment request 10 during the transmittal A2 of the assigned tag 2 to the entity device 300. However, as mentioned above an alternative is shown in fig. 2 where the tag 2 is assigned independently from the payment request, either before, during, or after the transmittal of said payment request to said entity device for transaction processing. In the latter case, preferably, the data within the tag further comprises at least a payment identification number 1004 in order to identify the relevant payment request, for which the tag 2 is belonging, which has arrived or will be arriving to the transaction responsible entity device 300.

In fig. 1 a stored entry in the verification database 1200 comprises a fraud check variable 3s, and optionally further data such as payer fraud information. Preferably, the database 1200 contains several records, one for each payment request issued and/or one for each merchant website being approved, depending on which of the two main embodiments is being utilized. The device operating the database 1200 is preferably adapted for handling several storing and verification processes at any time, and is suitable for handling a large number of records at a given time. Other means of storing may be conceived, all available for the skilled person, e.g. a computer listing, a running table, a website available database, while using different computer storing means, such as a hard disk, a diskette, or the like.

Said verification database 1200 may preferably be operated by a CPU, such as a separate computer device (not shown). The computer device (not shown) for handling the verification database 1200 may be operated by a source check service provider, and may be provided remotely from said transaction responsible entity's device 300, where the communication therebetween may be performed through the Internet or by a separate communication link. Alternatively, the verification database is provided within said transaction responsible entity's device 300. In any case, the verification database 1200 is preferably provided remotely from the merchant server 200 in order to safeguard the stored entries from any fraudulent attempt of trying to modify these.

A new source check tag is preferably generated each time a payment request is issued by the purchase subsystem of the website. Each tag generated is not identical with every other tag because the data therein, i.e. the fraud check variable is a variable. However, it is not necessary that each tag is unique, because fraudulent attempts of reusing a tag for further payment requests would have a lower probability of success even when only applying a binary variable different from each other. However, clearly, using a multitude of variables, even to unique variables decreases this probability even further.

The assigned and stored fraud check variable 3a, 3s may comprise a payer fraud risk potential 1002, e.g. as discussed above a user fraud risk potential as described in EP application no. 06075254.0 being provided based on analysis of user behaviour within said website. In a simple form, the fraud risk potential is an integer from 0 to 9, e.g. level 0 to level 9, indicating low fraud probability and high fraud probability, respectively. Other levels and their respective meaning may be conceived, e.g. binary, tri-level or multi-level indicator. The payer fraud risk potential 1002 may also be in the form of a colour level indication, e.g. green, yellow, red, or the like, as may be conceived. Preferably, a multi-level variable is used, because this will provide added security to the system and method according to the present invention, since the risk that a matching variable of a merchant will have been stored within the verification database will then be lower.

Alternatively, the fraud check variable 3a, 3s may be a randomly generated variable, e.g. a number and/or letter combination, only relevant for providing a variable for indicating attempted payment account fraud. However, a further advantage of assigning a fraud check variable, which indicates the potential for user fraud, is that it conveys more information than only the possibility of payment account fraud by a merchant, it also conveys the information of the potential of user fraud for each payment request issued by the website in question, which information may be used for said above mentioned user fraud check-up in relation to said transaction.

Alternatively or in combination with the above mentioned payer fraud risk potential, the fraud check variable may comprise source information 1006, which may comprise a unique source identification number or reference number, e.g. for retrieval of further corresponding data relating to the source, e.g. stored within said verification database. This may be merchant name, contract name, website name, products sold within said website, etc. The source information 1006 may preferably comprise a variable obtained within the website during the sale, e.g. a snap shot of the website, e.g. in a TIFF, JPG or other picture format, or a variable generated on the basis of the payment request in question, e.g. a given combination of integers and/or letters or the like.

Observe, that the data within the verification database may comprise further data apart from said fraud check variable, e.g. associated information, which often require more storage space than the fraud check variable. Accordingly, said tag may be used for retrieval of extensive information in a verification response for a data transfer to said entity device 300.

The tag 2 within the payment request 10 is relayed A2 to said transaction responsible entity 300. The entity 300 transmits at least the tag 2 comprising the encrypted data to the source identification service provider device (not shown) by a verification request V1 for verification of whether the payment request does in fact originate from a website, which has been approved by the acquirer. The data contained within the tag 2 is decrypted and used for a comparison whether they match the data stored within the verification database 1200 for an identification of the source website, from which the corresponding payment request originated. If the data tag 2 is positively verified using the verification database 1200, the source identification service provider device transmits a positive verification response V2 to the entity 300, and the processing of the transaction may continue by debiting said payment account 205. Additional data copied from the verification database may preferably be transmitted with said verification response V2.

Different forms of determinations may be employed depending on the content of the tag 2. Firstly, the determination may be positive if the assigned fraud check variable in the tag 2 finds a matching stored variable within the database, which is suitable e.g. for very different variables being used for identification, e.g. unique variables. Secondly, the determination may be positive, if the fraud check variable comprises a payment identification number and this is used for retrieving a matching fraud check variable. This is suitable, when there is a limited variation level within the fraud check variable, e.g. ten different levels. Thirdly, the determination may be positive, if the assigned fraud check variable at least matches a selection of stored fraud check variables, e.g. a predetermined selection of variables provided for a given source. This is suitable, when only a few levels of variation is available for the fraud check variable, e.g. when limited assignment space is available for the tag, when being provided with a payment request for example.

As shown in fig. 2, the tag 2 may travel through a chain of devices comprising an IPSP device 203 and an acquirer device 204 after being issued by the source. Said chain may be longer or shorter, depending on the number of devices the payment request is to be processed by. It may be only one device, e.g. the acquirer device 204 or an IPSP or alternatively a separate source check service provider (not shown), who is assigned the responsibility to provide one or more of the checks in relation to the payment request, i.e. the IPSP 203 or another entity may send the verification request V1. There may be more than two devices in the chain, e.g. when the source check is outsourced to a provider thereof. Generally, it is the acquirer, who is shouldering the financial and legal responsibilities, and thus the acquirer device 204 is verifying any tag 2 for further processing of payment requests.

In fig. 2, the transaction responsible entity is the acquirer device 204, who is provided a source check service by a source check provider device (not shown), e.g. hosting a verification database 1200. The source check tag 2 comprises a non-encrypted fraud check variable comprising payer fraud risk potential and corresponding payment identification number of a payment request (not shown) issued by said merchant website 420 at the same time as the fraud check variable 122 is stored within the verification database 1200. The tag 2 is transmitted by a computer link or the Internet to an IPSP device 203, who handles initial processing of the corresponding payment request, whereupon the tag 2 is transmitted to said acquirer device 204, independently from the corresponding payment request.

The acquirer relays the tag 2 comprising the non-encrypted data to the source identification service provider in a verification request V1 for verification of whether the corresponding payment request does in fact originate from a website, which has been approved by the acquirer. The data contained within the tag 2 is used for a comparison whether they match the data stored within the verification database 1200 for an identification of the source website, from which the corresponding payment request originated. If the data tag 2 is positively verified using the verification database 1200, the source identification service provider device transmits a verification response V2 to the acquirer 204, and the processing of the transaction may continue e.g. by debiting said payment account 205. If not positively verified, the acquirer 204 may choose to abort the processing of the transaction, and he may contact the merchant for an explanation of the inconsistency.

As shown, the verification means may be provided remotely from the IPSP device 203 and the acquirer device 203, respectively. Alternatively, the verification may be performed by either of these entities, e.g. by providing the source identification service provider processor 102 integrally therewith.

Alternatively, a fraud check tag may effectively travel from the source identification provider processor to acquirer device 204, the tag comprising data for identifying the relevant the payment request originating from said website 452. Accordingly, the IPSP processor 203 receives the payment request A2 without said source check tag 2, and relays said payment request on to the acquirer device 204, which transmits a verification request V1 comprising at least said source check tag 2 to the source identification service provider device for verification thereof, i.e. that the corresponding payment request does in fact originate from the website in question, and proceeds as explained above

As shown in figs. 3A to 3D, four different examples of said data tag 2 is shown, which tag may comprise data of different types, depending which of the two main embodiments are being used, and of the conditions under which they are to be used. Alternative tags are conceivable, comprising e.g. further data for providing said variable, or data for conveying further information, as required.

As shown in fig. 3A, the source check tag 2 comprises a first type of fraud check variable 3a comprising a payer fraud risk potential 1002, e.g. obtained by monitoring and recording events comprising user induced events within the website during the sale leading to the issued payment request. This tag is suitable for assigning by attaching to a payment request, because the data of the tag does not convey information as to which payment request it relates to.

As shown in fig. 3B, the tag 2 comprises a second type of fraud check variable 3a comprising a payer fraud risk potential 1002, and the corresponding payment identification number 1004, in which case the tag may be assigned independently from the payment request, to which it relates, see the description in relation to fig. 2.

As shown in fig. 3C, the tag 2 comprises a third type of fraud check variable 3a comprising source information 1006 as described above, which is suitable e.g. when the acquirer is using a verification database 1200 within his device 204, and the tag is further used for retrieving pre-stored merchant and/or website data within said database for further processing of the payment request. This third tag type is suitable for encryption, see fig. 3D, because with encryption, the tag is not easy to copy for other illegal payment requests.

In fig. 3D, as indicated with a bar design, the data comprised within the tag 2 is encrypted when the tag is assigned, where the data may comprise any of the above mentioned information. Different conventional techniques for encryption and the following decryption is available, and the skilled person will know how to apply this in an appropriate way, and thus the techniques will not be discussed further herein, except for mentioning a few alternatives: Secret key (symmetric), public key (asymmetric) e.g. S/MIME, hash functions, Diffie-Hellman protocols etc. Decryption generally takes place in relation to the verification process, either by the transaction responsible entity device 300, e.g. using a private key cryptography technique, or by the device comprising the verification database 1200. Encryption/decryption is in particular advantageous, when the tag may be easily copied for each new payment request, e.g. using exclusively source information 1006. By cryptography, the entity device 300 may be confident that information intended for his use only may be safeguarded.

Any of the tag types shown in figs. 3A to 3C may comprise further information, e.g. payer fraud information relating to the data providing the basis for the payer fraud risk potential. Any combination of payer fraud risk potential, payment identification number, source information and/or payer fraud information may also be perceived.

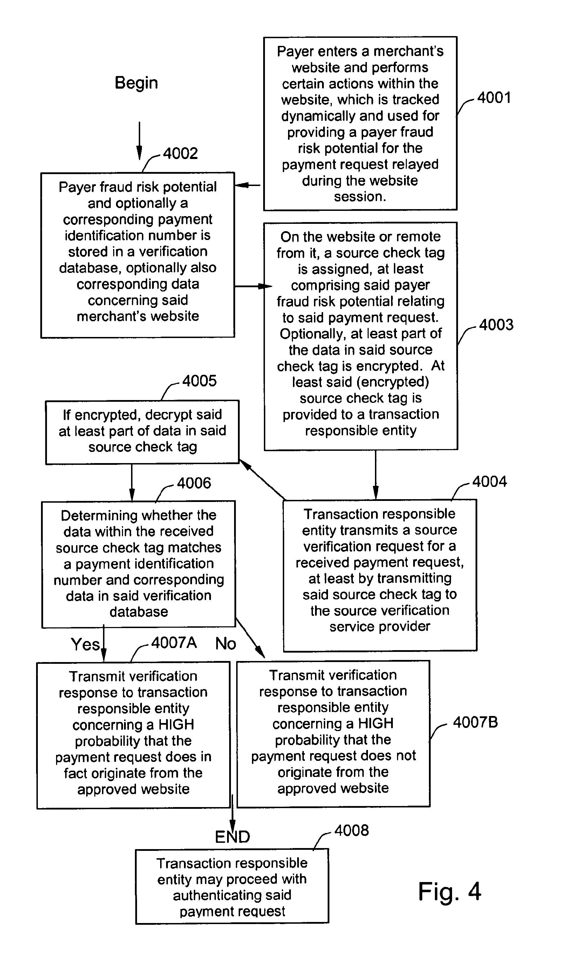

In use, see fig. 4, a method according to the invention is being performed in relation to a sales session for a payer within a website. In 4001 a payer enters a merchant's website and performs certain actions within the website, which is tracked dynamically and used for providing a payer fraud risk potential for the payment request relayed during the website session, e.g. as disclosed in European Patent application no.. 06075254.0.

In 4002 according to a storing step of the present invention, said payer fraud risk potential and optionally the corresponding payment identification number is stored in a verification database, optionally comprising also corresponding data concerning said merchant's website,. A new entry, such as a new record in the verification database is created e.g. by using a payment identification number identifying each payment request from said source.

In 4003 a source check tag is assigned according to the assigning step of the present invention on the website or remote from it, at least comprising said payer fraud risk potential relating to said payment request. Optionally, at least part of the data in said source check tag is encrypted. At least said (encrypted) source check tag is provided to a transaction responsible entity. If encrypted, decrypt said at least part of data in said source check tag.

In 4004 to 4007 is described a verification step according the present invention. In 4004 the transaction responsible entity transmits a verification request for a received payment request, at least by transmitting said source check tag to the source verification service provider. In 4005, if the tag is encrypted said at least part of data in said source check tag is decrypted for the verification of the data contained within. In 4006 it is determining whether the data within the received source check tag matches a payment identification number and corresponding data in said verification database. If it is a positive determination, in 4007A a verification response is transmitted to transaction responsible entity concerning a HIGH probability that the payment request does in fact originate from the approved website. If it is a negative determination, in 4007B a verification response is transmitted to transaction responsible entity concerning a HIGH probability that the payment request not originate from the approved website. The method according to the invention ends here.

In 4008 the transaction responsible entity may proceed with authenticating said payment request.

The step of storing may be performed simultaneously, later or before the step of assigning. The step of assigning may be performed continuously, e.g. a payer fraud risk potential is used for the fraud check variable, which potential changes over time, until a payment request is issued, whereafter the storing step is performed or vice versa.

Another example of a method for checking that the origin of a payment request is a specific source in order to reduce payment account fraud in relation thereto said method comprises the following steps: storing a fraud check variable being determined based on user behaviour with said source in relation to a payment providing said payment request and a corresponding payment identification number of said payment request; associating a source check tag with said payment request, said source check tag comprising at least said payment identification number, and verifying that said payment request comprising a source check tag is originating from said specific source by locating a stored fraud check variable corresponding to said payment identification number and matching said stored fraud check variable with said stored fraud check variable.

Yet another embodiment provides for the fraud check variable being time variable e.g. it may change over time, e.g. during the time period in which the sale is being performed and/or after, in the database depending on events happening before and/or after the payment request has been issued, such that it is only a current, say within 24 hours, fraud check variable assigned to a tag which matches the variable saved within the database. This would provide extra security, because the assigned and stored variable must match, and the way it varies over time is not apparent to the merchant.

It is obvious to the person skilled in the art that different changes and modifications may be made without departing from the scope of the present invention. In particular, the present invention may be used with a variety of different communication environments, such as HTML or VTML environments, and a variety of protocols, such as the standard HTTP and SSL protocols. A variety of programming languages may be used to implement the present invention, such as well known JAVA languages, C++ or C, for the Application Program Interface, API.

## Claims

1. A method for determining whether the origin of a payment request (10) is a specific e-commerce network source, in particular a website (420) in order to reduce payment account fraud in relation thereto, said method comprising the following steps:
- storing a fraud check variable (3s);
- assigning a source check tag (20) in relation to said payment request (10), said source check tag (20) comprising at least said fraud check variable (3a), and
- verifying that a payment request relating to a source check tag is originating from said specific source by determining whether said assigned fraud check variable (3a) matches said stored fraud check variable (3s).

2. A method according to claim 1, wherein said fraud check variable (3s, 3a) comprises a payer fraud risk potential (1002) being determined when a payer is performing a sale on said website leading to said payment request (10).

3. A method according to claim 2, wherein said payer fraud risk potential (1002) is provided based on an analysis of said payer's behaviour within said source when performing said sale.

4. A method according to any of the preceding claims, wherein said stored fraud check variable (3s) comprises a corresponding payment identification number (1004) relating to said payment request (10) and said verification step comprises determining whether said assigned fraud check variable (3a) matches said stored fraud check variable (3s) using a comparison of said stored payment identification number and the payment, identification number of the payment request.

5. A method according to any of the preceding claims, wherein said fraud check variable (3s, 3a) comprises source information (1006) relating to said source and said verification step comprises determining whether said stored source information matches said assigned source information.

6. A method according to claim 5, wherein said source information (1006) comprises information such as website name, merchant name, product category, and/or website snap shot of said source.

7. A method according to any of the preceding claims, wherein said source is a network site, such as a website (420) on the Internet (400).

8. A method according to claim 7, wherein said source is a specific webpage within said website (420), such as a payment page.

9. A method according to any of the preceding claims, said step of storing further comprises storing user fraud information (1008), such as logged events, acquired user data, and/or transaction data in relation to said payment request.

10. A method according to any of the preceding claims, wherein said stored fraud check variable (3s) is stored in a verification database (1200), optionally together with payment identification number (1004), source information (1006) and/or user fraud information (1008).

11. A method according to any of the preceding claims, wherein said assigning step is performed by a payment protocol within said source.

12. A method according to any of the preceding claims, wherein said assigning step is performed every time a payment request is provided from said source and said assigned fraud check variable (3a) is attached to said payment request (10).

13. A method according to any of the preceding claims 1 to 12, wherein said assigning step is performed every time a payment request (10) is provided from said source and said assigned fraud check variable (3a) is provided independently from said payment request (10).

14. A method according to claim 5, wherein said step of assigning is performed once to said source, e.g. when said source is being approved.

15. A method according to claim 5 or 14, wherein said source check tag further comprises a reference code unique to said source.

16. A method according to any of the preceding claims, further comprising the steps of 1) encrypting at least part of the data in said source check tag when assigning it, and 2) decrypting said encrypted part of said data when verifying the origin of said payment request.

17. A method according to claim 16, wherein said encryption and decryption comprises public and private key cryptography.

18. A method according to claim 16 or 17, wherein said at least part of the data comprises said fraud check variable, optionally comprising said payment identification number.

19. A method according to any of the preceding claims, wherein the step of verifying a source check tag comprises the steps of
- receiving a verification request (V1) from a transaction responsible entity device (300; 103, 104) comprising at least said source check tag (2); and
- transmitting a verification response (V2) to said entity device at least comprising the result of said determination.

20. A method according to claim 19, wherein said verification response (V2) further comprises one or more of the following: said payer fraud risk potential (1002), said source information (1004) and/or said user fraud information (1006).

21. A method according to claim 19 or 20 according to claim 10, wherein said verification database is provided remotely from said transaction responsible entity device (300).

22. A system for checking that the origin of a payment request is a specific source in order to reduce payment account fraud in relation thereto, said system comprising
- means for storing a fraud check variable (3s);
- means for assigning a source check tag (20) in relation to said payment request (10), said source check tag (20) comprising at least said fraud check variable (3a), and
- means for verifying that a payment request relating to a source check tag is originating from said specific source by determining whether said assigned fraud check variable (3a) matches said stored fraud check variable (3s).

23. A system according to claim 22, wherein said fraud check variable (3s, 3a) comprises a payer fraud risk potential (1002) being determined when a payer is performing a sale on said website leading to said payment request (10).

24. A system according to claim 23, wherein said payer fraud risk potential (1002) is provided based on an analysis of said payer's behaviour within said source when performing said sale.

25. A system according to any of the claims 22 to 24, where said stored fraud check variable (3s) comprises a corresponding payment identification number (1004) relating to said payment request (10) and said verification means is operable for determining whether said assigned fraud check variable (3a) matches said stored fraud check variable (3s) using a comparison of said stored payment identification number (1004) and the payment identification number of the payment request.

26. A system according to any of the claims 22 to 25, wherein said fraud check variable (3s, 3a) comprises source information (1006) relating to said source and said verification step comprises determining whether said stored source information matches said assigned source information.

27. A system according to claim 26, wherein said source information (1006) comprises information such as website name, merchant name, site name, product category, and/or website snap shot of said source.

28. A system according to any of the claims 22 to 27, wherein said source is a network site, such as a website (420) on the Internet (400).

29. A system according to any of the claims 22 to 28, wherein said source is a specific webpage within said website (420), such as a payment page.

30. A system according to any of the claims 22 to 29, said fraud check variable further comprising user fraud information (1008), such as logged events, acquired user data, and/or transaction data in relation to said payment identification number.

31. A system according to any of the claims 22 to 29, where said means for storing comprises a verification database (1200), optionally together with payment identification number source information (1006) and/or user fraud information (1008).

32. A system according to claim 32, where said verification database (1200) is located remotely from said website (420) and from a transaction responsible entity device (300)

33. A system according to claim 32, where said verification database (1200) is located locally with a transaction responsible entity device (300).
